(19) Europäisches Patentamt

European Patent Office

Office européen des brevets

(11) **EP 1 176 524 A1**

(12) **EUROPÄISCHE PATENTANMELDUNG**

(43) Veröffentlichungstag:
**30.01.2002 Patentblatt 2002/05**

(51) Int Cl.⁷: **G06F 17/40**

(21) Anmeldenummer: **01110108.6**

(22) Anmeldetag: **02.05.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **27.07.2000 DE 10036679**

(71) Anmelder: **GSF-Forschungszentrum für Umwelt und Gesundheit GmbH**
**85758 Oberschleissheim (DE)**

(72) Erfinder:
• **Scherb, Hagen, Dr.**
  **82223 Eichenau (DE)**
• **Weigelt, Eveline**
  **85748 Garching (DE)**

(74) Vertreter: **Reinhard - Skuhra - Weise & Partner**
**Friedrichstrasse 31**
**80801 München (DE)**

(54) **Verfahren zur Darstellung zeitlich-räumlicher Trends von statistischen Daten**

(57) Die vorliegende Erfindung schafft ein Verfahren zur Darstellung zeitlich-räumlicher Trends von statistischen Daten mit den Schritten: Bereitstellen von technischen Meßdaten (Cs) für eine erste Mehrzahl von räumlich verschiedenen Orten zu einer zweiten Mehrzahl von verschiedenen Zeiten; Bereitstellen von entsprechenden statistischen Daten (SB, LB) für die erste Mehrzahl von räumlich verschiedenen Orten zu der zweiten Mehrzahl von verschiedenen Zeiten; und Erstellen von Trenddaten (SB/TB) für die statistischen Daten (SB, LB) anhand eines räumlich-zeitlich logistischen Regressionsansatzes, welcher für jeden Ort eine erste Dummyvariable ($d_i$) enthält und für zeitlich-räumliche Wechselwirkungen eine zweite Dummyvariable ($d_i$*Jahr) enthält, wobei die zweite Dummyvariable ($d_i$*Jahr) proportional zur ersten Dummyvariable multipliziert mit der jeweiligen Zeit oder einer Transformation der jeweiligen Zeit ist.

Fig. 3

## Beschreibung

STAND DER TECHNIK

Die vorliegende Erfindung betrifft ein Verfahren zur Darstellung zeitlich-räumlicher Trends von statistischen Daten.

Obwohl auf beliebige Meßdaten anwendbar, werden die vorliegende Erfindung und die ihr zugrundeliegende Problematik anhand der Cäsium 137 Belastung in den bayerischen Landkreisen und dem Totgeburttrend erläutert.

Es gibt viele Möglichkeiten, diesen Trend zu modellieren. Man kann rein zeitliche, rein räumliche und zeitlichräumliche Trends verwenden. Man kann den Jahren 1987 und 1988 besondere relative Wichtungen erteilen oder sie separat bzw. kombiniert als Dummyvariable betrachten. Dies führt i.a. zu unterschiedlichen Signifikanzen.

Eine der vorliegenden Erfindung zugrundeliegende Aufeabe besteht also darin, ein effektives Verfahren anzugeben, das die Berechnung eines räumlich-zeitlichen Trends einer Meßdaten-Reihe ermöglicht, insbesondere eines Wirkungstrends für eine Meßdaten-Zeitreihe von Ursachendaten.

VORTEILE DER ERFINDUNG

Das erfindungsgemäße Verfahren zur Darstellung zeitlich-räumlicher Trends von Meßdaten mit den Merkmalen des Anspruchs 1 weist gegenüber den bekannten Lösungsansätzen den Vorteil auf, daß die räumlich-zeitliche Information einer Belastungs-Wirkungs-Beziehung voll ausgeschöpft werden kann.

Die der vorliegenden Erfindung zugrundeliegende Idee besteht darin, einen zeitlich-räumlich logistischen Regressionsansatz mit Indikatorvariablen für die Elemente der räumlichen Gliederung und Interaktionen der räumlichen Indikatorvariablen mit geeigneten Zeitvariablen bzw. deren Transformationen vorzusehen.

In den Unteransprüchen finden sich vorteilhafte Weiterbildungen und Verbesserungen des in Anspruch 1 angegebenen Verfahrens zur Darstellung zeitlich-räumlicher Trends von Meßdaten.

Gemäß einer bevorzugten Weiterbildung weist der räumlich-zeitlich logistische Regressionsansatz eine Form auf, bei der die Trenddaten die Summe sämtlicher erster und zweiter Dummyvariablen und des betreffenden technischen Meßdatenwerts oder transformierten technischen Meßdatenwerts enthalten.

Gemäß einer weiteren bevorzugten Weiterbildung enthält der räumlich-zeitlich logistische Regressionsansatz für die Trenddaten eine Offset-Variable. Letztere Offset-Variable kann, falls notwendig, zeitabhängig gewählt werden.

Gemäß einer weiteren bevorzugten Weiterbildung werden aus dem Regressionsansatz für die Trenddaten die ersten Dummyvariablen durch ein Anpassungsverfahren, beispielsweise durch einen Least-Squares-Fit, ermittelt.

Gemäß einer weiteren bevorzugten Weiterbildung sind die technischen Meßdaten physikalische Umweltdaten.

Gemäß einer weiteren bevorzugten Weiterbildung sind die statistischen Daten biologische Umweltdaten.

ZEICHNUNGEN

Ausführungsbeispiele der Erfindung sind in den Zeichnungen dargestellt und in der nachfolgenden Beschreibung näher erläutert.

Es zeigen:

Fig. 1  ein Beispiel für eine Meßdatendatei bei einem Ausführungsbeispiel des Verfahrens gemäß der vorliegenden Erfindung;

Fig. 2  eine Darstellung sämtlicher landesspezifischer Trends der Totgeburtenproportion in Bayern von 1980 bis 1993 ohne die Daten aus 1987 und 1988; und

Fig. 3  eine Darstellung sämtlicher landesspezifischer Trends der Totgeburtenproportion in Bayern von 1980 bis 1993 mit den Daten aus 1987 und 1988.

BESCHREIBUNG DER AUSFÜHRUNGSBEISPIELE

In den Figuren bezeichnen gleiche Bezugszeichen gleiche oder funktionsgleiche Bestandteile.

Bei diesem hier aufgeführten Ausführungsbeispiel handelt es sich um ein Verfahren zur Berechnung von Schätzwerten für Risikokoeffizienten pro $kBq/m^2$ für Gesundheitsindikatoren unter besonderer Berücksichtigung von deren zeitlichen Trends in sämtlichen Landkreisen. Dazu wurden Cäsium-137-Meßwerte für die 96 bayerischen Landkreise für die Jahre 1980 bis 1993 aufgenommen, wobei der Einfluß des Unfalls von Tschernobyl im April 1986 auf die Totgeburtrate untersucht werden sollte.

Als Gesundheitsindikatoren wurden beispielshalber Totgeburten bzw. perinatale Sterblichkeit herangezogen.

Zunächst wurde dazu eine Meßdatendatei mit den Daten Jahr, Landkreisnummer, Cäsium-Meßwert (Cs), Totgeburten (SB) und Lebendgeburten (LB) angelegt. Dabei gilt für die Gesamtgeburten (TB) die Beziehung

$$TB = SB + LB \qquad (1)$$

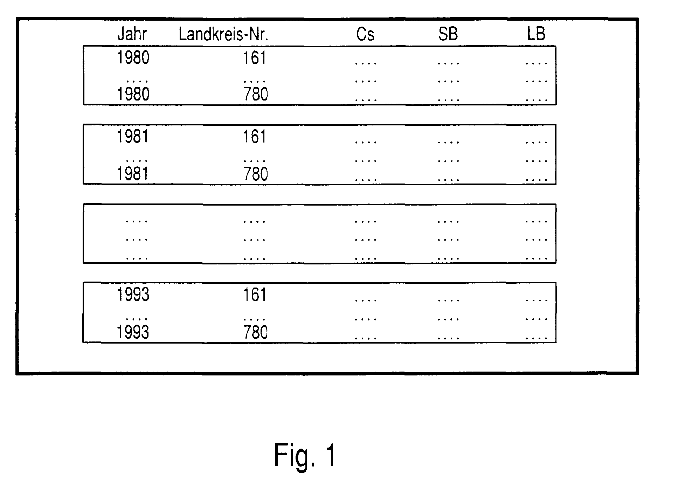

Diese Meßdatendatei ist in Fig. 1 illustriert.

Anschließend erfolgt eine Definition von räumlichen ersten Dummyvariablen $d_1$, $d_2$, ..., $d_{96}$ entsprechend der Anzahl der Landkreise, welche jeweils einem Landkreis zugeordnet sind..

Anschließend erfolgt eine Definition von zeitlich-räumlichen zweiten Dummyvariablen $dt_1$, $dt_2$, ..., $dt_{96}$ entsprechend der Anzahl der Landkreise für die Jahre 1980 bis 1993, welche jeweils einem Landkreis zugeordnet sind, wobei gilt:

$$dt_i = d_i * Jahr \qquad (2)$$

Schließlich erfolgt eine Definition einer Konstante "Intercept", welche einen möglichen Offset des Indikators von Null berücksichtigt.

In einem weiteren Schritt wird ein räumlich-zeitlich logistischer Regressionsansatz aufgestellt, welcher folgende Form aufweist:

$$SB/TB = Intercept + Cs + ...$$

$$... + d_1 + d_2 + ... + d_{96} + dt_1 + dt_2 + ... + dt_{96} \qquad (3)$$

Dieser Regressionsansatz hat also 96 Variable $d_i$, welche durch ein standardmäßiges Anpassungsverfahren, beispielsweise durch einen Least-Squares-Fit, ermittelbar sind.

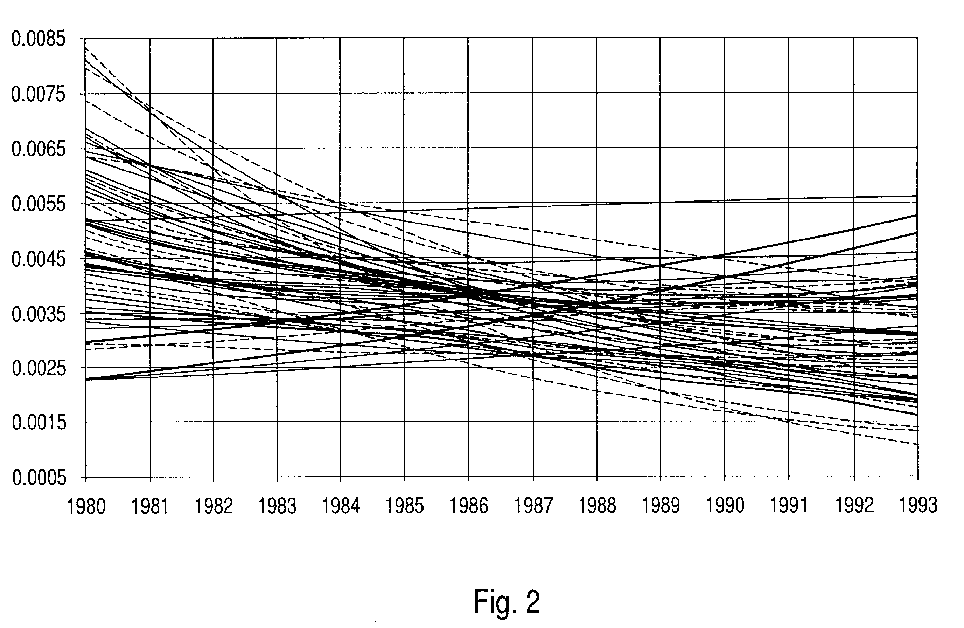

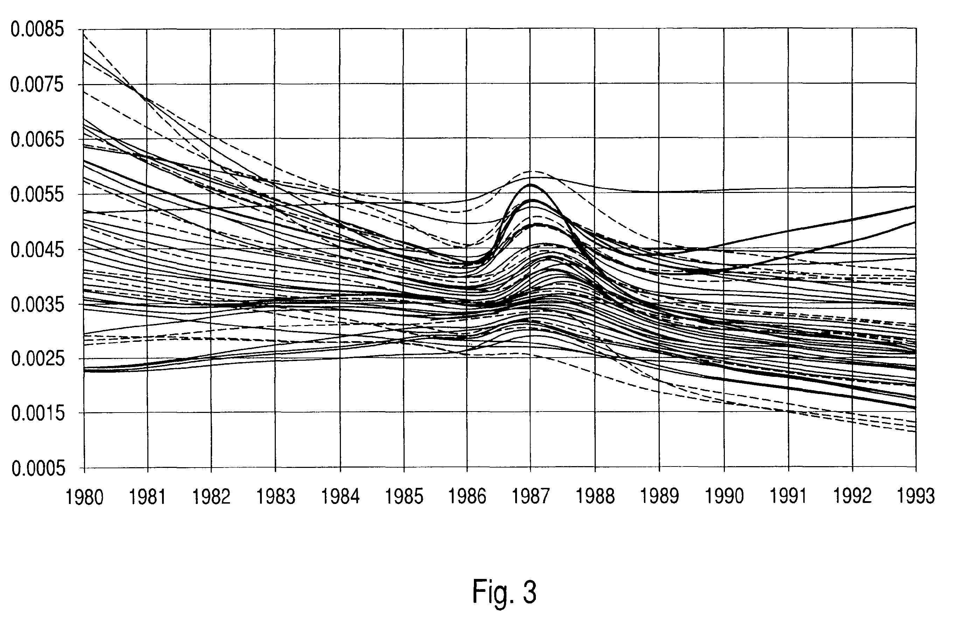

Die Ergebnisse der so ermittelten Trends für SB/TB sind in Fig. 2 und 3 für alle 96 Landkreise dargestellt, wobei Fig. 2 eine Darstellung sämtlicher landesspezifischer Trends der Totgeburtenproportion in Bayern von 1980 bis 1993 ohne die Daten aus 1987 und 1988 ist und Fig. 3 eine Darstellung sämtlicher landesspezifischer Trends der Totgeburtenproportion in Bayern von 1980 bis 1993 mit den Daten aus 1987 und 1988 ist.

Deutlich erkennbar zeigt Fig. 2 keine signifikanten Abweichungen, wohingegen in Fig. 3 eine signifikante Zunahme von SB/TB zwischen 1986 und 1989 erkennbar ist. Somit wird ebenfalls deutlich, daß das obige Verfahren einen wertvollen Beitrag zur Erkennung von Trends liefert.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Allgemein gesagt beruht der obige Ansatz auf einem linearen logistischen Modell, wobei

$$\Theta i = Wahrscheinlichkeit (Yi = 1)$$

wobei Yi die abhängige Zielvariable ist. Als Ansatz wurde

$$\Theta i = 1/(1 + exp(-a_i b)) \qquad (4)$$

gewählt. Dabei ist $a_i$ eine Zeile bekannter Daten und b eine Spalte unbekannter Parameter.

Daraus ergibt sich

$$\lambda i = \ln (\Theta i / 1 - \Theta i) = a_{\cdot} b = \sum_{s=1}^{p} a_{is} b_s \qquad (5)$$

wobei s eine Laufvariable s = 1, ..., p ist, oder allgemein in Matrixform

$$\lambda = ab \qquad (6)$$

Auch ist die Erfindung auf beliebige Daten anwendbar und nicht auf das gezeigte Beispiel beschränkt. Auch kann die Darstellung auf einem beliebigen Display erfolgen.

**Patentansprüche**

1. Verfahren zur Darstellung zeitlich-räumlicher Trends von statistischen Daten mit den Schritten:

   Bereitstellen von technischen Meßdaten (Cs) für eine erste Mehrzahl von räumlich verschiedenen Orten zu einer zweiten Mehrzahl von verschiedenen Zeiten oder Transformationen der Meßdaten (Cs);

   Bereitstellen von entsprechenden statistischen Daten (SB, LB) für die erste Mehrzahl von räumlich verschiedenen Orten zu der zweiten Mehrzahl von verschiedenen Zeiten; und

   Erstellen von Trenddaten (SB/TB) für die statistischen Daten (SB, LB) anhand eines räumlich-zeitlich logistischen Regressionsansatzes, welcher für jeden Ort eine erste Dummyvariable ($d_i$) enhält und für zeitlich-räumliche Wechselwirkungen eine Zweite Dummyvariable ($d_i$*Jahr) enthält, wobei die zweite Dummyvariable ($d_i$*Jahr) proportional zur ersten Dummyvariable multipliziert mit der jeweiligen Zeit oder einer Transformation der jeweiligen Zeit ist.

2. Verfahren nach Anspruch 1, **dadurch gekennzeichnet, daß** der räumlich-zeitlich logistische Regressionsansatz eine Form aufweist, bei der die Trenddaten die Summe sämtlicher erster und zweiter Dummyvariablen und des betreffenden technischen Meßdatenwerts oder transformierten technischen Meßdatenwerts enthalten.

3. Verfahren nach Anspruch 2, **dadurch gekennzeichnet, daß** der räumlich-zeitlich logistische Regressionsansatz für die Trenddaten (SB/TB) eine optionell zeitabhängige Offset-Variable (Intercept) enthält.

4. Verfahren nach einem der vorhergehenden Ansprüche, **dadurch gekennzeichnet, daß** aus dem Regressionsansatz für die Trenddaten (SB/TB) die ersten Dummyvariablen ($d_i$) durch ein Anpassungsverfahren, beispielsweise durch einen Least-Squares-Fit, ermittelt werden.

5. Verfahren nach einem der vorhergehenden Ansprüche, **dadurch gekennzeichnet, daß** die technischen Meßdaten (Cs) physikalische Umweltdaten sind.

6. Verfahren nach einem der vorhergehenden Ansprüche, **dadurch gekennzeichnet, daß** die statistischen Daten (SB, LB) biologische Umweltdaten sind.

| Jahr | Landkreis-Nr. | Cs | SB | LB |
|------|---------------|------|------|------|
| 1980 | 161 | .... | .... | .... |
| .... | .... | .... | .... | .... |
| 1980 | 780 | .... | .... | .... |
| 1981 | 161 | .... | .... | .... |
| .... | .... | .... | .... | .... |
| 1981 | 780 | .... | .... | .... |
| .... | .... | .... | .... | .... |
| .... | .... | .... | .... | .... |
| .... | .... | .... | .... | .... |
| 1993 | 161 | .... | .... | .... |
| .... | .... | .... | .... | .... |
| 1993 | 780 | .... | .... | .... |

## Fig. 1

Fig. 2

Fig. 3

**Europäisches**
**Patentamt**

**ERKLÄRUNG**

die nach Regel 45 des Europäischen Patentübereinkommens für das weitere Verfahren als
europäischer Recherchenbericht gilt

**Nummer der Anmeldung**

EP 01 11 0108

| Die Recherchenabteilung ist der Auffassung, daß die vorliegende Patentanmeldung den Vorschriften des EPÜ in einem solchen Umfang nicht entspricht, daß sinnvolle Ermittlungen über den Stand der Technik auf der Grundlage aller Patentansprüche nicht möglich sind. | **KLASSIFIKATION DER ANMELDUNG (Int.Cl.7)** |
|---|---|
| Grund: | G06F17/40 |

Der Gegenstand der Ansprüche 1-6 fällt
unter die Bestimmungen des Artikels 52(2)
und (3) EPÜ (Mathematische Methoden, die
Wiedergabe von Informationen und Pläne,
Regeln und Verfahren für geschäftliche
Tätigkeiten als solche).

Der Anmelder wird darauf hingewiesen, daß
im Zuge der Prüfung eine Recherche
durchgeführt werden kann, sollten die
einer Erklärung gemäß Regel 45 EPÜ
zugrundeliegenden Mängel behoben worden
sein (Vgl. EPA-Richtlinien C-VI, 8.5).

---

-----

| Recherchenort | Abschlußdatum | Prüfer |
|---|---|---|
| DEN HAAG | 20. September 2001 | Pedersen, N |

EPO FORM 1504 (P04C39)